# EUROPEAN PATENT SPECIFICATION

(11) **EP 4 252 873 B1**
(45) Date of publication and mention of the grant of the patent: **11.11.2026**
(21) Application number: 23161764.8
(22) Date of filing: 14.03.2023
(51) Int. Cl.: A63F 13/235, A63F 13/323, A63F 13/327

(54) **PROCESSING DEVICES, SYSTEMS AND METHODS**
VERARBEITUNGSVORRICHTUNGEN, -SYSTEME UND -VERFAHREN
DISPOSITIFS, SYSTÈMES ET PROCÉDÉS DE TRAITEMENT

(30) Priority: 31.03.2022 GB 202204684
(43) Date of publication of application: 04.10.2023
(73) Proprietor: Sony Interactive Entertainment Inc., Tokyo 108-0075 (JP)
(72) Inventor: UBERTI, David, London, W1F 7LP (GB); COCKRAM, Philip, London, W1F 7LP (GB); HENDERSON, Christopher, London, W1F 7LP (GB)
(74) Representative: Fish & Richardson P.C.

(56) References cited:
- WO-A1-2020/205340
- US-A1- 2021 029 224
- ANONYMOUS: "Network bridge - Wikipedia", 26 March 2022 (2022-03-26), XP093071414, Retrieved from the Internet <URL:https%3A%2F%2Fen.wikipedia.org%2Fw%2Findex.php%3Ftitle%3DNetwork_bridge%26oldid%3D1079382004> [retrieved on 20230807]

## Description

### Field of Invention

The present invention relates to processing devices, systems and methods.

### Background

In recent years, video games have become an increasingly popular hobby for many individuals. From the early 8-bit arcade machines, the video game industry has moved towards providing users with ever more realistic and innovative video games, which may enjoyed within the a user's own home.

Therefore, currently many users play video games by using a PC or a video game console, the latter being designed to primarily run video games. Video games are often optimised for a specific video game console by a developer, which may enable a user to reliably run video games on their video game console without having to spend time configuring each video game for their specific video game console. Additionally, the user will know that the game is compatible with their video game console prior to running the video game, without the need to compare the required specification for running the video game to the specifications of their video game console.

A handheld video game controller is typically used to control a video game console by providing inputs to the video game console. As video game consoles are often used in a living room and use a television as a display, it is desirable for a user to be able to move around freely when playing video games using a handheld video game controller.

Consequently, controllers may communicate with a console via a wireless communication connection. For example, a console and a controller may communicate via a Bluetooth^{®} connection, which may provide a maximum communication range of approximately 10m.

As video games become more innovative and provide users with more immersive experiences, some video games may require a user to move further away from their video game console. For example, a user playing a video game on their video game console in their living room using a wireless video game controller may be required to reach a particular location in the real world to progress in the video game. However, the user may also need to provide inputs to the video game console using the wireless videogame controller whilst they move towards the particular location, which may be located at a distance greater than the maximum range of the Bluetooth^{®} connection achievable by the controller. Previously proposed arrangements are disclosed by US 2021/029224 A1; WO 2020/205340 A1; and "Network bridge - Wikipedia", 26 March 2022, URL: https://en.wikipedia.org/w/index.php?title=Network bridge&oldid=1079382004.

It is in this context that the present disclosure arises.

### Summary of the Invention

In a first aspect, a video game console is provided in claim 1.

In a second aspect, a handheld video game controller is provided in claim 5.

In a third aspect, a method for a video game console is provided in claim 9.

Further respective aspects and features of the invention are defined in the appended claims.

Embodiments of the present invention will now be described by way of example with reference to the accompanying drawings, in which:
- Figure 1 schematically illustrates an example entertainment system;
- Figures 2A, 2B and 2C each schematically illustrate an example of a processing device, a video game console and a handheld video game controller respectively;
- Figures 3A and 3B illustrate an example embodiment featuring a processing device, a video game console and a handheld video game controller; and
- Figures 4A and 4B each schematically illustrate an example method.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

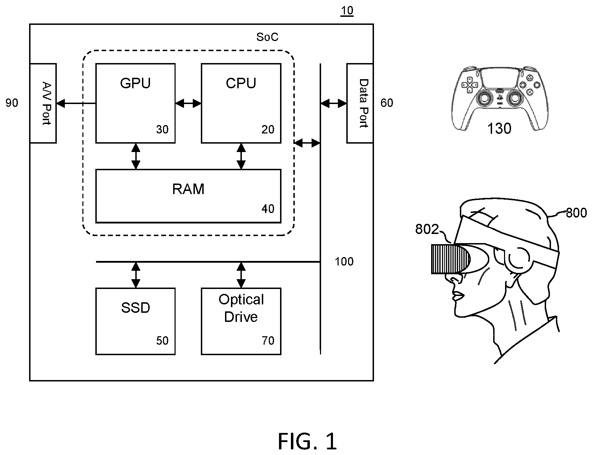

Referring to Figure 1, an example of an entertainment system 10 is a computer or console such as the Sony ^{®} PlayStation 5 ^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 130, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800. Alternatively or in addition, a TV or monitor may be used.

It is desirable to increase the maximum distance from where a user may interact with a video game console using a handheld video game controller. Previously proposed arrangements for increasing this distance have corresponding drawbacks.

For example, using longer wires for a wired connection between a controller and a console results in large unwieldy wires that may become tangled, more easily damaged, or present a trip hazard. For wireless controllers, increasing the power of a controller's transmitter may result in a significant reduction in the battery life of the controller, which is undesirable.

Therefore, it is desirable to provide techniques that may increase the maximum distance from where a user may interact with a video game console using a handheld video game controller, and may eliminate or reduce the effect of the abovementioned drawbacks.

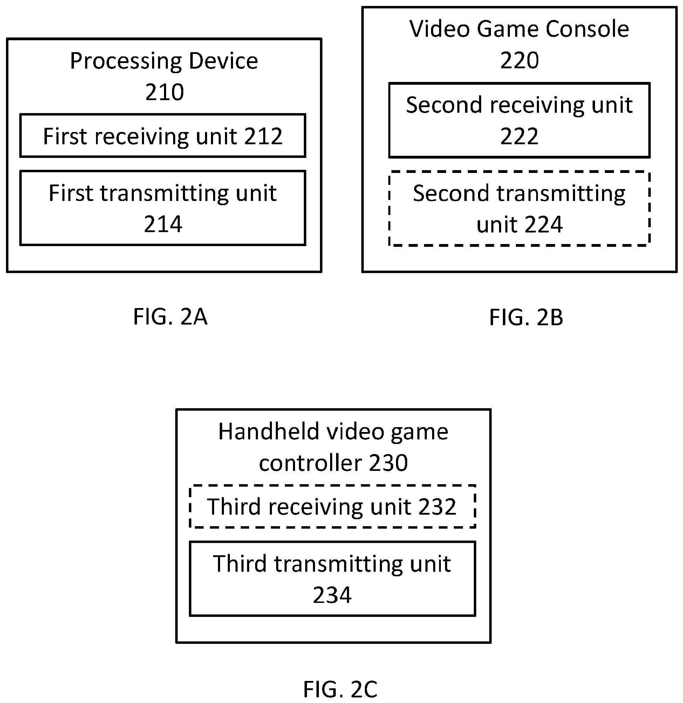

Figures 2A, 2B and 2C schematically illustrate a processing device 210, a video game console 220 and a handheld videogame controller 230 respectively in accordance with one or more embodiments of the present disclosure. It should be noted that the dashed outline of some of the features of figures 2A, 2B and 2C indicate that these features are optional features.

The processing device 210 comprises a first receiving unit 212 and a first transmitting unit 214. The video game console 220 comprises a second receiving unit 222 and, optionally, a second transmitting unit, 224. The handheld video game controller 230 comprises a third transmitting unit 234 and, optionally, a third receiving unit 232.

For simplicity, it should be noted that the term "video game console" (without a reference numeral) is used throughout the description, and it should be understood to refer to instances where the video game console 220, which is illustrated in figure 2B and described elsewhere herein, and a generic video game console or other computer that may communicate with a hand-held controller such as a PC, which operates according to well known techniques, may be used interchangeably. It should also be noted that, throughout the description, the term "console" may be used, for brevity, to refer to the "video game console".

Similarly, the term "handheld video game controller" (without a reference numeral) is used throughout the description, and it should be understood to refer to instances where the handheld video game controller 230, which is illustrated in figure 2C and described elsewhere herein, and a generic handheld videogame controller 130, which operates according to well known techniques, may be used interchangeably. It should also be noted that, throughout the description, the term "controller" may be used, for brevity, to refer to the "handheld video game controller".

Turning now to the processing device 210, the processing device 210 is schematically illustrated in figure 2A. In some embodiments, the processing device 210 comprises a first receiving unit 212 that is configured receive one or more inputs for a video game console from a handheld video game controller using a first communication protocol; and a first transmitting unit 214 that is configured to transmit the one or more inputs to the video game console using a second communication protocol. In these embodiments, communication using the second communication protocol has a longer range than communication using the first communication protocol.

Before expanding on the operation of the processing device 210, the first communication protocol and the second communication protocol will be discussed in more detail.

The first communication protocol may be, for example, communication via any suitable short range wireless protocol, such as Bluetooth ^{®}, WiFi Direct ^{®} or near field transmission.

In some embodiments, the processing device 210 and the video game console may be configured to connect to a network to communicate according to the second communication protocol. For example, the wireless network may be a local area network (LAN), a personal area network (PAN) between the processing device 210 and the video game console, or to a network such as the internet.

For example, when the internet is used as the network, the processing device 210 may connect to the internet via a cellular network, such as a 4G or a 5G network, whilst the video game console may connect to the internet via a Wi-Fi^{®} network or an Ethernet connection. Therefore, the processing device 210 and the video game console may communicate according to the second communication protocol via the internet. Advantageously, as the processing device 210 is connected to the internet via a cellular network, the processing device 210 may remain connected to the internet, and therefore be able to maintain communication with the video game console, even if the processing device 210 moves between cells of the cellular network.

However, it should be noted that other possible configurations are possible. For example, the processing device 210 and the video games console may both connect directly to the same Wi-Fi^{®} network, in which case the processing device 210 and the video game console may communicate according to the second communication protocol via the Wi-Fi^{®} network without requiring a connection to the internet (although the Wi-Fi^{®} network may be optionally connected to the internet).

As another example, the processing device 210 may connect to a LAN wirelessly and the video game console may connect to the LAN via an Ethernet connection. The processing device 210 and the video game console may communicate according to the second communication protocol via the LAN.

Hence the second communication protocol may comprise a cellular and/or Wi-Fi^{®} network communication protocol as appropriate.

Returning now to the description of the processing device 210, an illustrative example will now be provided. In this example, a handheld video game controller may be configured to communicate with either or both of the processing device 210 and the video game console using a first communication protocol via a short range wireless connection such as Bluetooth^{®}. Meanwhile, the processing device 210 and the video game console may be configured to communicate using a second communication protocol via a long range wireless connection such as a Wi-Fi^{®}.

It should be noted that, in this example, "short range" and "long range" have been used as relative terms and should not be taken as an indication of the absolute value of the range of the wireless communication. In other words, the range of the "short range wireless communication" merely has to be shorter than the range of the "long range wireless communication", and the range of the "short range wireless communication" may otherwise be unconstrained.

In this example, if the distance between the video game console and the handheld video game controller is too large for a Bluetooth^{®} connection to be established or maintained, the video game console would not be able to receive one or more inputs for the video game console directly from the handheld video game controller using the first communication protocol. The distance may be too large because a user carrying the handheld video game controller has moved too far away from the video game console for example.

However, the processing device 210 may be portable in a manner similar to the handheld video game controller. For example, the processing device 210 may be a smartphone. Therefore, a user may carry both the processing device 210 and the handheld video game controller. It should be noted that the processing device 210 is not limited to being a smartphone. For example, the processing device 210 may be a hardware produced for the purposes of performing the techniques described herein.

In this example, the processing device 210 comprises a first receiving unit 212 that is configured to receive the one or more inputs for the video game console from the handheld video game controller using the first communication protocol via, in this example, a Bluetooth^{®} connection between the first processing device 210 and the handheld video game controller in this example.

The Bluetooth^{®} connection between the first processing device 210 and the handheld video game controller may be established while the handheld video game controller is able to connect to the video game console via Bluetooth^{®}, or may only be established after the handheld video game controller is unable to establish or maintain a Bluetooth^{®} connection with the video game console.

The processing device 210 comprises a first transmitting unit 214 that is configured to transmit the one or more inputs to the video game console using the second communication protocol via, in this example, a Wi-Fi^{®} connection between the processing device 210 and the console.

Therefore, the video game console may receive the one or more inputs generated by the handheld video game controller from the processing device 210 using the second communication protocol, even though the video game console is unable to establish or maintain a direct connection to the handheld video game controller using the first communication protocol.

Optionally, in some embodiments, the first receiving unit 212 may be configured to receive one or more control signals for the handheld video game controller from the video game console using the second communication protocol. In these embodiments, the first transmitting 214 unit may be configured to transmit the one or more control signals to the handheld video game controller using the first communication protocol.

Therefore, in some embodiments, the first receiving unit 212 may receive the inputs from the controller using the first communication protocol and may receive the control signals from the video game console using the second communication protocol. Meanwhile, the first transmitting unit 214 may transmit the inputs to the video game console using the second communication protocol and may transmit the control signals to the controller using the first communication protocol.

The processing device 210 may therefore increase the maximum communication distance between the controller and the video game console, and may also maintain the functionality of both the controller and the video game console.

A control signal may, for example, be any signal that may be generated by the video game console suitable for controlling one or more functions of the handheld video game controller. Examples of functions of a handheld video game controller that may be controlled by a control signal include haptic feedback, such as vibration or adaptive triggers; the colour or intensity of light generated by the controller if the controller comprises one or more lights; a sound to be emitted by the controller if the controller comprise a means for generating sound, such as a speaker; display data to be displayed by the controller if the controller comprises a display; or any other suitable function of a handheld video game controller that may be controlled by one or more control signals.

In some embodiments, the first receiving unit 212 may be configured to receive, from the video game console using the second communication protocol, a forwarding request. The forwarding request may comprise data that enables the first receiving unit 212, when receiving data using the first communication protocol, to spoof a receiving unit of the video game console. In response to receiving the forwarding request, the first receiving unit 212 may be configured to spoof the receiving unit of the video game console to receive the one or more inputs from the handheld video game controller using the first communication protocol.

For example, forwarding request may comprise a reception ID that corresponds to the reception ID of the receiving unit of the video game console. The reception ID may used by a transmitter to, for example, identify a reception address of a recipient of a transmission or identify an intended recipient of a transmission.

The first receiving unit 212 may therefore identify any transmissions that are transmitted using the first communication protocol for a receiving unit using the reception ID contained within the forwarding request, as the indented recipient of the identified transmissions will be the video game console. The processing device 210 may therefore receive the identified transmissions using the first communication protocol. The first transmitting unit 214 may then transmit the received transmissions to the video game console using the second communication protocol.

Alternatively, or in addition, the forwarding request may, for example, comprise decryption keys; authentication information; or any other information that may enable the first receiving unit 212 to spoof a receiving unit of the video game console when receiving data using the first communication protocol.

The first receiving unit 212 of the processing device 210 being configured to spoof a receiving unit of the video game console may improve the interoperability of the processing device 210 with a generic video game controller that operates according to well known techniques, as the video game controller would not need to be aware that the recipient of the one or more inputs transmitted by the controller using the first communication protocol has changed from the video game console to the processing device 210.

Further optionally, the forwarding request may comprise data that enables the first transmitting unit 214, when transmitting data using the first communication protocol, to spoof a transmitting unit of the video game console. In this case, in response to receiving the forwarding request, the first transmitting unit 214 may be configured to spoof the transmitting unit of the video game console to transmit the one or more control signals to the handheld video game controller using the first communication protocol.

Therefore, the forwarding request may enable the processing device 210 to spoof the video game console for both the transmission of control signals to, and the reception of inputs from, the controller using the first communication protocol.

For brevity, a detailed discussion of the data that may enable the first transmitting unit 214, when transmitting data using the first communication protocol, to spoof a transmitting unit of the video game console will be omitted. However, it should be noted that the data may take the same, or at least a substantially similar, form to the data that may enable the first receiving unit 212, when receiving data using the first communication protocol, to spoof a receiving unit of the video game console, which has been discussed elsewhere herein. However, it should also be noted that the data for spoofing a transmitting unit may comprise a transmission ID instead of a reception ID for example.

Turning now to the video game console 220, the video game console 220 is illustrated in figure 2B. In some embodiments, the video game console comprises a second receiving unit 222 that is configured to receive one or more inputs for the video game console from a handheld video game controller using a first communication protocol. In these embodiments, in response to a detection of at least one predetermined criterion being met, the second receiving unit 222 is configured to switch from receiving the one or more inputs from the handheld video game controller using the first communication protocol, to receiving the one or more inputs from a processing device 210 using a second communication protocol. Communication using the second communication protocol has a longer range than communication using the first communication protocol, as described elsewhere herein.

At least one predetermined criterion is met in response to an indication that the communication between the video game console and the handheld video game controller using the first communication protocol is unstable or impossible, or in response to an indication of at least a minimum probability that the communication using the first communication protocol may become unstable or impossible within a predetermined duration of time.

Returning to the illustrative example where communication using the first communication protocol is via a short range wireless connection such as Bluetooth^{®}, in this example, at least one of the predetermined criterion may be met in response to a detection that the signal strength of the Bluetooth^{®} connection has decreased below a predetermined threshold, or that the Bluetooth^{®} connection has disconnected.

Alternatively, or in addition, at least one of the predetermined criterion may be met in response to a detection that the signal strength of the Bluetooth^{®} connection is decreasing at, or faster than, a predetermined rate, which may be an indication of at least a minimum probability that the communication using the Bluetooth^{®} connection may become unstable or impossible within a predetermined duration of time.

Alternatively, or in addition, at least one of the predetermined criterion may be met in dependence upon position data that may be received by the video game console 220 from the processing device 210 using the second communication protocol. In this case, the processing device 210 may comprise one or more positioning sensors such as a GPS sensor or an accelerometer.

Alternatively, or in addition, the position data may be received by the video game console 220 from the handheld video game controller using the first communication protocol. In this case, the handheld video game controller may comprise one or more positioning sensors such as a GPS sensor or an accelerometer.

The position data may be indicative of the position of the handheld video game controller, even when the positioning data is generated by sensors on the processing device 210, as it may be assumed that the user is carrying both the handheld video game controller and the processing device 210. Therefore, the movements of the handheld video game controller may be inferred from the position data of the processing device 210.

In these embodiments, at least one of the predetermined criterion may, for example, be met in response to the handheld video game controller moving a predetermined distance relative to a previously indicated position of the handheld video game controller or relative to the position of the video game console, or may be met in response to the handheld video game controller moving at or above a predetermined speed.

All of these examples, where at least one of the predetermined criterion may be met in dependence upon the position data, may also be examples where at least one of the predetermined criterion may be met in response to an indication of at least a minimum probability that the communication using the first communication protocol may become unstable or impossible within a predetermined duration of time, as the position data may be indicate that the handheld video game controller is moving, or is about to move, out of the maximum range for direct communication between the handheld video game controller and the video game console 220 to occur.

Similarly in these embodiments, at least one of the predetermined criterion may, for example, be met by a command from a game itself, as the game may initiate the user action that takes them out of conventional range of the first communication protocol; switching to the second communication protocol at the same time based on a game command is therefore likely to reduce or minimise any period of poor communication with the first protocol. It may also facilitate the calculation of input lag by comparing timings on both communication paths, as described elsewhere herein.

In response to the detection of at least one of the predetermined criterion being met, the second receiving unit 222 may be configured to switch from receiving the one or more inputs from the handheld video game controller using the first communication protocol, to receiving the one or more inputs from the processing device 210 using the second communication protocol.

It may be preferable to transmit the one or more inputs for the video game console 220 directly from the handheld video game controller to the video game console 220 using the first communication protocol in comparison to the processing device 210 receiving the one or more inputs from the handheld video game controller using the first communication protocol and transmitting the received one or more inputs to the video game console 220 using the second communication protocol, since it may reduce an input lag of the one or more inputs.

An input lag is the time taken between an input being generated by the handheld video game controller and the input being processed by the video game console. Therefore, as the communication between the handheld video game controller and the video game console 220 using the first communication protocol is a direct communication (i.e. there are no intermediary devices) the input lag time may be lower.

However, as handheld video game controllers typically use short range wireless communication techniques, which may improve the battery life of the controller in comparison to using longer range wireless communication techniques, the range of handheld video game controllers may often be limited to a range of approximately 10m. Therefore, it may be undesirable for the controller itself to use a longer range communication protocol as it may reduce the total battery life of the controller.

The present disclosure therefore proposes techniques that may advantageously enable a controller to utilise a direct connection to a console when possible but also prevent a reduction in the battery life of the controller by avoiding the use of longer range communication protocols that may require more power.

Additionally, some embodiments provide techniques that may advantageously reduce the likelihood that one or more of the inputs from the controller will be lost when communication between the controller and the console using the first communication protocol becomes unstable or impossible, as the second receiving unit 222 may switch from receiving the one or more inputs from the controller to receiving the one or more inputs from the processing device 210 in response to the detection of at least one of the predetermined criterion being met, which may, for example, be indicative of at least a minimum probability that the communication using the first communication protocol may become unstable or impossible within a predetermined duration of time, as described elsewhere herein.

In some embodiments, during the second receiving unit's 222 switch from receiving the one or more inputs from the handheld video game controller using the first communication protocol, to receiving the one or more inputs from the processing device 210 using the second communication protocol, it may be advantageous for the second receiving unit 222 to receive, for a predetermined duration, both the one or more inputs from the handheld video game controller using the first communication protocol and the corresponding one or more inputs from the processing device 210 using the second communication protocol.

The overlap between the received inputs may advantageously enable the video game console 220 to calculate the difference in time between the reception of inputs received using the first communication protocol and the reception of the corresponding inputs received using the second protocol (i.e. the difference in input lag times). This time difference is referred to as an "input lag penalty" thought the description. The video game console 220 may compensate for the input lag penalty in dependence upon the calculated input lag penalty.

The compensation may comprise adding a delay to the execution of the video game in dependence upon the calculated input lag penalty, reducing a difficulty of the game by modifying one or more difficulty factors, such as increasing an auto aim assist level or reducing an enemy health or damage amount, or by artificially increasing the input lag of other players of the video game in dependence upon the calculated input lag penalty.

In some embodiments, the video game console 220 may comprise a second transmitting unit 224 that may be configured to transmit one or more control signals for the handheld video game controller to the handheld video game controller using the first communication protocol. In these embodiments, in response to the detection at least one of the predetermined criterion being met, the second transmitting unit 224 may be configured to switch from transmitting the one or more control signals to the handheld video game controller using the first communication protocol, to transmitting the one or more control signals to the processing device 210 using the second communication protocol.

The features relating to the second transmitting unit 224 have been described elsewhere herein in relation to the second receiving unit 222, so, for brevity, a repetition of the description of these features will be omitted.

In some embodiments, in response to the detection of at least one of the predetermined criterion being met, the second transmitting unit 224 may be configured to transmit, to the processing device 210 using the second communication protocol, a forwarding request comprising data that enables a receiving unit 212 of the processing device 210, when receiving data using the first communication protocol, to spoof the second receiving unit 222.

Optionally, in these embodiments, the forwarding request may also comprise data that enables a transmitting unit 214 of the processing device 210, when transmitting data using the first communication protocol, to spoof the second transmitting unit 224.

A detailed description of the features relating to the forwarding request is provided elsewhere herein in relation to the processing device 210. Therefore, a repeated description of the features relating to the forwarding request will be omitted.

Turning now to the handheld video game controller 230, the handheld video game controller 230 is schematically illustrated in figure 2C. The handheld video game controller 230 comprises a third transmitting unit 234 configured to transmit one or more inputs for a video game console to the video game console using a first communication protocol. In response to a detection of at least one predetermined criterion being met, the third transmitting unit 234 is configured to switch from transmitting the one or more inputs to the video game console using the first communication protocol, to transmitting the one or more inputs to a processing device 210 using the first communication protocol.

The predetermined criterion may, for example, be the same as the at least one predetermined criterion that have been discussed elsewhere herein in relation to the video game console 220, so a repeated description of the predetermined criterion will be omitted.

Therefore, the handheld video game controller 230, in comparison to a generic handheld video game controller that operates according to well known techniques, may actively switch from transmitting the inputs to a video game console, to transmitting the inputs to the processing device 210 in response to the detection of at least one of the predetermined criterion being met.

However it will also be appreciated that if the processing device 210 is arranged to spoof the videogame console, the handheld video game controller may not need to actively switch in this manner, and in response to the communication changing from the video game console to the processing device 210 spoofing as the videogame console, may act conventionally as if it had temporarily lost and regained connection with the videogame console.

It should be noted that a generic controller that operates according to well-known techniques may still be improved using techniques discussed elsewhere herein. For example, the processing device 210 may spoof a video game console as discussed elsewhere herein.

In this example, a generic controller may only transmit the inputs to one reception ID using the first communication protocol. The reception ID may, for example, identify a reception address of a recipient of the transmission or identify an intended recipient of the transmission. The video game console may receive the inputs directly from the generic controller using the first communication protocol. Alternatively, or in addition, the processing device 210 may spoof the reception ID of the video game console to receive the inputs from the generic controller using the first communication protocol, as described elsewhere herein, and then transmit the inputs to the video game console using the second communication protocol.

In some embodiments, the handheld video game controller 230 may comprise a third receiving unit 232 that may be configured to receive one or more control signals for the handheld video game controller 230 from the video game console using the first communication protocol. In these embodiments, in response to the detection of at least one of the predetermined criterion being met, the third receiving unit 232 may be configured to switch from receiving the one or more control signals from the video game console using the first communication protocol, to receiving the one or more control signals from the processing device 210 using the first communication protocol.

The features of these embodiments have been described elsewhere herein in relation to the processing device 210 and the video game console 220, such as the description of the control signals, so a repeated description of these features will be omitted.

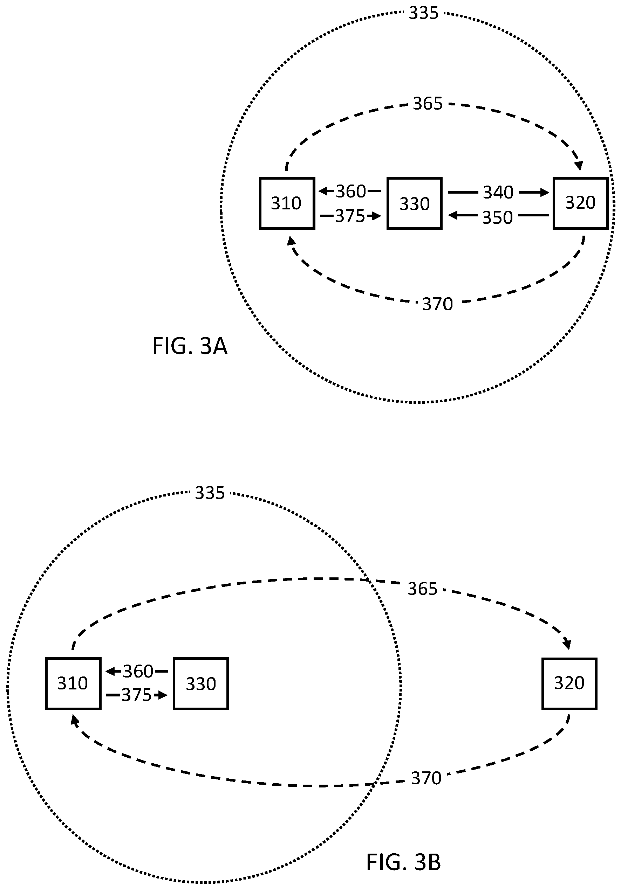

Turning now to figures 3A and 3B, these figure illustrates an exemplary embodiment of an example system according to the above described embodiments. We note that these figures and the corresponding description is merely provided as an example, and all of the features that are shown in these figures are not essential for carrying out the techniques disclosed elsewhere herein. Figures 3A and 3B comprise a processing device 310, a video game console 320, and a handheld video game controller 330.

The solid straight arrows in figures 3A and 3B indicate the transmissions that may, but do not necessarily, occur using a first communication protocol, and the dashed curved lines indicate the transmissions that may, but do not necessarily, occur using a second communication protocol. The dotted circle 335 shows the maximum distance from the handheld video game controller 330 where it is still possible for the handheld video game controller 330 to communicate using the first communication protocol, which will be referred to as the controller's maximum range 335.

Figure 3A, illustrates an example where the distance between the controller 330 and the console 320 is less than the controller's maximum range 335.

Figure 3B illustrates an example where both the processing device 310 and the controller 330 have moved relative to the console 320 in comparison to the example of figure 3A, so that the distance between the controller 330 and the console 320 is greater than the controller's maximum range 335. Meanwhile, in figure 3B, the processing device 310 has not moved relative to the controller 330.

Accordingly, in figure 3A, the controller 330 may communicate 340, 350 with the console 320 using the first communication protocol. For example, the controller 330 may transmit 340 data, such as one or more inputs, to the console 320 using the first communication protocol and may receive 350 data, such as one or more control signals, from the console 320 using the first communication protocol.

In both figures 3A and 3B, the distance between the processing device 310 and the controller 330 is less than the controller's maximum range 335. Therefore, the controller 330 may communicate 360, 375 with the processing device 310 using the first communication protocol. For example, both figures 3A and 3B show that the controller may transmit 360 data, such as the one or more inputs, to the processing device 310 using the first communication protocol and may receive 375 data, such as the one or more control signals, from the processing device 310 using the first communication protocol.

Additionally, both figures 3A and 3B show that the processing device 310 and the console 320 may communicate 365, 370 using the second communication protocol. For example, the processing device 310 may transmit 365 data to the console 320 using the second communication protocol, and may receive 370 data from the console 320 using the second communication protocol.

Data sent via the transmission 365 using the second communication protocol may comprise, for example, the one or more inputs that may be received by the processing device 310 from the controller 330 via the transmission 360 using the first communication protocol. Meanwhile, data received by the processing device 310 via the transmission 370 may comprise, for example, the one or more control signals, which may then be transmitted by the processing device 310 to the controller 330 via the transmission 375 using the first communication protocol.

It is noted that, just because all of the possible transmissions are shown in figures 3A and 3B, this does not mean that it is essential that all of these transmissions occur. In figure 3A for example, the only transmission may be the transmission 340 of one or more inputs from the controller 330 to the console 320 using the first communication protocol. Meanwhile, in figure 3B, the only transmissions may be the transmission 360 of the one or more inputs (from the controller 330 to the processing device 310 using the first communication protocol) and the transmission 365 of the one or more inputs (from the processing device 310 to the console 330 using the second communication protocol).

However, the control signals may, optionally, also be communicated as described elsewhere herein. For example, the control signals may be communicated via the transmission 350 in the case of Figure 3A, and via the transmission 370 and the transmission 375 in the case of figure 3B.

Additionally, in the example of figure 3A, the one or more inputs may optionally be sent from the controller 330 to the console 320 via two transmission routes at the same time. One of the transmission routes is the trivial case of the controller 330 transmitting 340 the one or more inputs directly to the console using the first communication protocol. The other route, however, comprises the controller 330 transmitting 360 the one or more inputs to the processing device 310 using the first communication protocol, and the processing device 310 then transmitting 365 the received one or more inputs to the console 320.

In this example, the console 320 may only use, as inputs, the one or more inputs directly received 340 from the controller 330. However, the console may compare the arrival time of the one or more inputs directly received 340 from the controller 330 and the corresponding one or more inputs received from the processing device 310 in order to calculate an input lag penalty (i.e. the difference in the input lag between the two transmission routes as described elsewhere herein).

As the second communication protocol may be implemented using one or more different communication means, such as a LAN or the internet, the input lag difference may have be variable in dependence upon the specific implementation. Therefore, as the console 320 receives the one or more inputs twice (once from each of the two transmission routes), the console may advantageously calculate the input lag penalty.

The console 320 may vary the input lag compensation (as described elsewhere herein), which may be applied when the one or more inputs are only received 365 from the processing device 310 using the second communication protocol, in dependence upon the calculated input lag penalty.

Alternatively, or in addition, the console 320 may modify the requirements for meeting at least one of the predetermined criterion (which have been described elsewhere herein) in dependence upon the calculated input lag penalty.

For example, consider a predetermined criterion that may be met in response to an indication of at least a minimum probability that the communication 340, 350 with the controller using the first communication protocol may become unstable or impossible within a predetermined duration of time. The console 320 may modify the requirements for meeting the predetermined criterion by, for example, modifying the minimum probability and/or modifying the predetermined duration of time in dependence upon the calculated input lag penalty.

As an illustrative example, if the calculated input lag penalty is larger than a predetermined threshold, the console 320 may modify the requirements for meeting the predetermined criterion by increasing the minimum probability and/or decreasing the predetermined duration of time. Therefore, the console 320 may increase the requirements for meeting the predetermined criterion if the input lag penalty is high.

This may be beneficial, even though it may increase the likelihood that some of inputs may not be received by the console 320 via the connection 340 due to the connection becoming unstable, as the disruption to a user caused by some of the inputs not being received may be less than disruption caused by all of the inputs having an input lag penalty above a certain threshold.

As a result, the console 320 may continue to use the inputs received 340 directly from the controller 330 even though, prior to the modification of the predetermined threshold, the console 320 may have switched to using the inputs received 365 from the processing device 310 instead.

Similarly, if the calculated input lag penalty is less than a predetermined threshold, the console 320 may modify the requirements for meeting the predetermined criterion by decreasing the minimum probability and/or increasing the predetermined duration of time. Therefore, the console 320 may decrease the requirements for meeting the predetermined criterion if the input lag penalty is low.

This may be beneficial as, if the input lag penalty is below a certain threshold, the input lag difference between the two transmission paths may be imperceptible for most users. Furthermore, the decreased requirements for meeting the predetermined thresholds may decrease the likelihood that some of inputs may not be received by the console 320, as the console 320 may switch to receiving the inputs from the processing device 310 before the connection 340, 350 to the controller becomes unstable.

In some embodiments, a system is provided. The system comprises the processing device 210 (as described elsewhere herein); the handheld video game controller 230 (as described elsewhere herein); and a video game console or equivalent, such as a PC. The video game console comprises a second receiving unit that is configured to receive the one or more inputs from at least one of the handheld video game controller 230 using the first communication protocol and the processing device 210 using the second communication protocol.

In some embodiments, another system is provided. The system comprises the processing device 210 (as described elsewhere herein); the video game console 220 (as described elsewhere herein); and a handheld video game controller. The handheld video game controller is configured to transmit the one or more inputs, using the first communication protocol, to at least one of the processing device 210 and the video game console 220. For example, in these embodiments, the handheld video game controller may be a generic handheld video game controller operating according to well-known techniques, or may be the handheld video game controller 230 (as described elsewhere herein). In other words, the handheld video game controller may knowingly switch from transmitting to the console 220 to transmitting to the processing device 210, or may be unaware of a change to a recipient of the controller's transmissions.

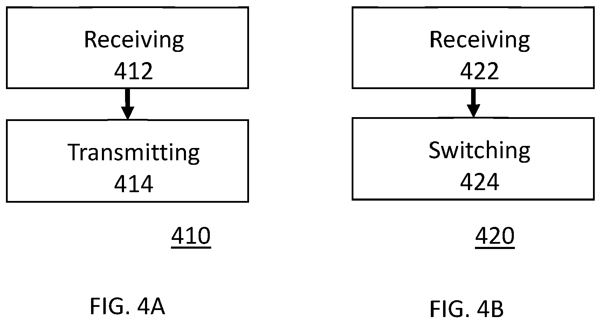

Turning now to figures 4A and 4B. Each of these figures schematically illustrate a method in accordance with some embodiments of the present disclosure.

Referring now to figure 4A, in some embodiments, a method 410 is provided. The method 410 comprises the steps of receiving 412 one or more inputs for a video game console from a handheld video game controller using a first communication protocol; and transmitting 414 the one or more inputs to the video game console using a second communication protocol. In these embodiments, communication using the second communication protocol has a longer range than communication using the first communication protocol.

Referring now to figure 4B, in some embodiments, a method 420 is provided. The method 420 comprises the steps of receiving 422 one or more inputs for the video game console from a handheld video game controller using a first communication protocol; and switching 424, in response to a detection of at least one predetermined criterion being met, from receiving the one or more inputs from the handheld video game controller using the first communication protocol, to receiving the one or more inputs from a processing device using a second communication protocol. In these embodiments, communication using the second communication protocol has a longer range than communication using the first communication protocol.

In some embodiments of the present disclosure, a computer program is provided. The computer program comprising computer executable instructions adapted to cause a computer system to perform any of the methods described elsewhere herein.

It will be appreciated that the above methods may be carried out on conventional hardware (such as the processing device 210, video game console 220, or handheld video game controller 230) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

## Claims

1. A video game console (10, 220, 320) comprising:
a second receiving unit (222) configured to receive one or more inputs for the video game console from a handheld video game controller (130, 230, 330) using a first communication protocol, wherein
in response to a detection of at least one predetermined criterion being met, the second receiving unit is configured to switch from receiving the one or more inputs from the handheld video game controller using the first communication protocol, to receiving the one or more inputs from a processing device (210, 310) using a second communication protocol, wherein
communication using the second communication protocol has a longer range than communication using the first communication protocol, in which at least one predetermined criterion is met in response to an indication that the communication between the video game console and the handheld video game controller using the first communication protocol is unstable or impossible, and/or is met in response to an indication of at least a minimum probability that the communication using the first communication protocol may become unstable or impossible within a predetermined duration of time.

2. The video game console according to claim 1, further comprising a second transmitting unit (224) configured to transmit one or more control signals for the handheld video game controller to the handheld video game controller using the first communication protocol, wherein
in response to the detection of at least one predetermined criterion being met, the second transmitting unit is configured to switch from transmitting the one or more control signals to the handheld video game controller using the first communication protocol, to transmitting the one or more control signals to the processing device using the second communication protocol.

3. The video game console according to any one of claims 1 or 2, wherein, in response to the detection of at least one predetermined criterion being met, the second transmitting unit is configured to transmit, to the processing device using the second communication protocol, a forwarding request comprising data that enables a receiving unit of the processing device, when receiving data using the first communication protocol, to spoof the second receiving unit.

4. The video game console according to claim 3, wherein the forwarding request comprises data that enables a transmitting unit of the processing device, when transmitting data using the first communication protocol, to spoof the second transmitting unit.

5. A handheld video game controller (130, 230, 330) comprising:
a third transmitting unit (234) configured to transmit one or more inputs for a video game console to the video game console using a first communication protocol, wherein
in response to a detection of at least predetermined criterion being met, the third transmitting unit is configured to switch from transmitting the one or more inputs to the video game console using the first communication protocol, to transmitting the one or more inputs to a processing device using the first communication protocol, in which at least one predetermined criterion is met in response to an indication that the communication between the video game console and the handheld video game controller using the first communication protocol is unstable or impossible, and/or is met in response to an indication of at least a minimum probability that the communication using the first communication protocol may become unstable or impossible within a predetermined duration of time.

6. The handheld video game controller according to claim 5, comprising:
a third receiving unit configured to receive one or more control signals for the handheld video game controller from the video game console using the first communication protocol, wherein
in response to the detection of at least one predetermined criterion being met, the third receiving unit is configured to switch from receiving the one or more control signals from the video game console using the first communication protocol, to receiving the one or more control signals from the processing device using the first communication protocol.

7. A system comprising:
the handheld video game controller according to any one of claims 5-6;
a video game console comprising:
a second receiving unit configured to receive the one or more inputs from at least one of the handheld video game controller using the first communication protocol and a processing device using a second communication protocol; and
the processing device comprising:
a first receiving unit configured to receive one or more inputs for the video game console from a handheld video game controller using the first communication protocol; and
a first transmitting unit configured to transmit the one or more inputs to the video game console using the second communication protocol, wherein
communication using the second communication protocol has a longer range than communication using the first communication protocol.

8. A system comprising:
the video game console according to any one of claims 1-4;
a processing device comprising:
a first receiving unit configured to receive one or more inputs for the video game console from a handheld video game controller using the first communication protocol; and
a first transmitting unit configured to transmit the one or more inputs to the video game console using the second communication protocol; and
the handheld video game controller configured to transmit the one or more inputs, using the first communication protocol, to at least one of the processing device and the video game console.

9. A method (420) for a video game console, the method comprising the steps of:
receiving (422) one or more inputs for the video game console from a handheld video game controller using a first communication protocol; and
switching (424), in response to a detection of at least one predetermined criterion being met, from receiving the one or more inputs from the handheld video game controller using the first communication protocol, to receiving the one or more inputs from a processing device using a second communication protocol, wherein
communication using the second communication protocol has a longer range than communication using the first communication protocol, in which at least one predetermined criterion is met in response to an indication that the communication between the video game console and the handheld video game controller using the first communication protocol is unstable or impossible, and/or is met in response to an indication of at least a minimum probability that the communication using the first communication protocol may become unstable or impossible within a predetermined duration of time.

10. A computer-readable storage medium comprising instructions which, when executed by a computer, cause the computer to carry out the method of claim 9.

## Patentansprüche

1. Videospielkonsole (10, 220, 320), umfassend:
eine zweite Empfangseinheit (222), die konfiguriert ist, um eine oder mehrere Eingaben für die Videospielkonsole von einem handgehaltenen Videospielcontroller (130, 230, 330) unter Verwendung eines ersten Kommunikationsprotokolls zu empfangen, wobei
als Reaktion auf eine Erfassung, dass mindestens ein vorbestimmtes Kriterium erfüllt ist, die zweite Empfangseinheit konfiguriert ist, um von dem Empfangen der einen oder der mehreren Eingaben von dem handgehaltenen Videospielcontroller unter Verwendung des ersten Kommunikationsprotokolls zu einem Empfangen der einen oder der mehreren Eingaben von einer Verarbeitungsvorrichtung (210, 310) unter Verwendung eines zweiten Kommunikationsprotokolls umzuschalten, wobei
die Kommunikation unter Verwendung des zweiten Kommunikationsprotokolls eine größere Reichweite als eine Kommunikation unter Verwendung des ersten Kommunikationsprotokolls aufweist, in dem mindestens ein vorbestimmtes Kriterium, als Reaktion auf eine Angabe, dass die Kommunikation zwischen der Videospielkonsole und dem handgehaltenen Videospielcontroller unter Verwendung des ersten Kommunikationsprotokolls instabil oder unmöglich ist, erfüllt ist, und/oder als Reaktion auf eine Angabe von mindestens einer Mindestwahrscheinlichkeit, dass die Kommunikation unter Verwendung des ersten Kommunikationsprotokolls innerhalb einer vorbestimmten Zeitdauer instabil oder unmöglich werden kann, erfüllt ist.

2. Videospielkonsole nach Anspruch 1, ferner umfassend eine zweite Übertragungseinheit (224) die konfiguriert ist, um ein oder mehrere Steuersignale für den handgehaltenen Videospielcontroller an den handgehaltenen Videospielcontroller unter Verwendung des ersten Kommunikationsprotokolls zu übertragen, wobei
als Reaktion auf die Erfassung, dass mindestens ein vorbestimmtes Kriterium erfüllt ist, die zweite Übertragungseinheit konfiguriert ist, um von dem Übertragen des einen oder der mehreren Steuersignale an den handgehaltenen Videospielcontroller unter Verwendung des ersten Kommunikationsprotokolls zu dem Übertragen des einen oder der mehreren Steuersignale an die Verarbeitungsvorrichtung unter Verwendung des zweiten Kommunikationsprotokolls umzuschalten.

3. Videospielkonsole nach einem der Ansprüche 1 oder 2, wobei, als Reaktion auf die Erfassung, dass mindestens ein vorbestimmtes Kriterium erfüllt ist, die zweite Übertragungseinheit konfiguriert ist, um an die Verarbeitungsvorrichtung unter Verwendung des zweiten Kommunikationsprotokolls eine Weiterleitungsanforderung zu übertragen, umfassend Daten, die eine Empfangseinheit der Verarbeitungsvorrichtung beim Empfang von Daten unter Verwendung des ersten Kommunikationsprotokolls aktivieren, um die zweite Empfangseinheit zu täuschen.

4. Videospielkonsole nach Anspruch 3, wobei die Weiterleitungsanforderung Daten umfasst, die eine Übertragungseinheit der Verarbeitungsvorrichtung beim Senden von Daten unter Verwendung des ersten Kommunikationsprotokolls aktivieren, um die zweite Übertragungseinheit zu täuschen.

5. Handgehaltener Videospielcontroller (130, 230, 330), umfassend:
eine dritte Übertragungseinheit (234), die konfiguriert ist, um eine oder mehrere Eingaben für eine Videospielkonsole unter Verwendung eines ersten Kommunikationsprotokolls an die Videospielkonsole zu übertragen, wobei
als Reaktion auf eine Erfassung, dass mindestens ein vorbestimmtes Kriterium erfüllt ist, die dritte Übertragungseinheit konfiguriert ist, um von dem Übertragen der einen oder der mehreren Eingaben an die Videospielkonsole unter Verwendung des ersten Kommunikationsprotokolls zum Übertragen der einen oder der mehreren Eingaben an eine Verarbeitungsvorrichtung unter Verwendung des ersten Kommunikationsprotokolls umzuschalten, wobei mindestens ein vorbestimmtes Kriterium als Reaktion auf eine Angabe erfüllt ist, dass die Kommunikation zwischen der Videospielkonsole und dem handgehaltenen Videospielcontroller unter Verwendung des ersten Kommunikationsprotokolls instabil oder unmöglich ist, erfüllt ist, und/oder als Reaktion auf eine Angabe von mindestens einer Mindestwahrscheinlichkeit, dass die Kommunikation unter Verwendung des ersten Kommunikationsprotokolls innerhalb einer vorbestimmten Zeitdauer instabil oder unmöglich werden kann, erfüllt ist.

6. Handgehaltener Videospielcontroller nach Anspruch 5, umfassend:
eine dritte Empfangseinheit, die konfiguriert ist, um ein oder mehrere Steuersignale für den handgehaltenen Videospielcontroller von der Videospielkonsole unter Verwendung des ersten Kommunikationsprotokolls zu empfangen, wobei
als Reaktion auf die Erfassung, dass mindestens ein vorbestimmtes Kriterium erfüllt ist, die dritte Empfangseinheit konfiguriert ist, um von dem Empfangen des einen oder der mehreren Steuersignale von der Videospielkonsole unter Verwendung des ersten Kommunikationsprotokolls zu dem Empfangen des einen oder der mehreren Steuersignale von der Verarbeitungsvorrichtung unter Verwendung des ersten Kommunikationsprotokolls umzuschalten.

7. System, umfassend:
den handgehaltenen Videospielcontroller nach einem der Ansprüche 5 bis 6;
eine Videospielkonsole, umfassend:
eine zweite Empfangseinheit, die konfiguriert ist, um die eine oder mehreren Eingaben von mindestens einem von dem handgehaltenen Videospielcontroller unter Verwendung des ersten Kommunikationsprotokolls und einer Verarbeitungsvorrichtung unter Verwendung eines zweiten Kommunikationsprotokolls zu empfangen; und
die Verarbeitungsvorrichtung, umfassend:
eine erste Empfangseinheit, die konfiguriert ist, um eine oder mehrere Eingaben für die Videospielkonsole von einem handgehaltenen Videospielcontroller unter Verwendung des ersten Kommunikationsprotokolls zu empfangen; und
eine erste Übertragungseinheit, die konfiguriert ist, um die eine oder die mehreren Eingaben an die Videospielkonsole unter Verwendung des zweiten Kommunikationsprotokolls zu übertragen, wobei
die Kommunikation unter Verwendung des zweiten Kommunikationsprotokolls eine größere Reichweite als die Kommunikation unter Verwendung des ersten Kommunikationsprotokolls aufweist.

8. System, umfassend:
die Videospielkonsole nach einem der Ansprüche 1 bis 4;
eine Verarbeitungsvorrichtung, umfassend:
eine erste Empfangseinheit, die konfiguriert ist, um eine oder mehrere Eingaben für die Videospielkonsole von einem handgehaltenen Videospielcontroller unter Verwendung des ersten Kommunikationsprotokolls zu empfangen; und
eine erste Übertragungseinheit, die konfiguriert ist, um die eine oder die mehreren Eingaben unter Verwendung des zweiten Kommunikationsprotokolls an die Videospielkonsole zu übertragen; und
den handgehaltenen Videospielcontroller, der konfiguriert ist, um die eine oder die mehreren Eingaben unter Verwendung des ersten Kommunikationsprotokolls an mindestens eine von der Verarbeitungsvorrichtung und der Videospielkonsole zu übertragen.

9. Verfahren (420) für eine Videospielkonsole, das Verfahren umfassend die Schritte:
Empfangen (422) einer oder mehrerer Eingaben für die Videospielkonsole von einem handgehaltenen Videospielcontroller unter Verwendung eines ersten Kommunikationsprotokolls; und
Umschalten (424), als Reaktion auf eine Erfassung, dass mindestens ein vorbestimmtes Kriterium erfüllt ist, von dem Empfangen der einen oder mehreren Eingaben von dem handgehaltenen Videospielcontroller unter Verwendung des ersten Kommunikationsprotokolls zu dem Empfangen der einen oder der mehreren Eingaben von einer Verarbeitungsvorrichtung unter Verwendung eines zweiten Kommunikationsprotokolls, wobei
die Kommunikation unter Verwendung des zweiten Kommunikationsprotokolls eine größere Reichweite als eine Kommunikation unter Verwendung des ersten Kommunikationsprotokolls aufweist, in dem mindestens ein vorbestimmtes Kriterium, als Reaktion auf eine Angabe, dass die Kommunikation zwischen der Videospielkonsole und dem handgehaltenen Videospielcontroller unter Verwendung des ersten Kommunikationsprotokolls instabil oder unmöglich ist, erfüllt ist, und/oder als Reaktion auf eine Angabe von mindestens einer Mindestwahrscheinlichkeit, dass die Kommunikation unter Verwendung des ersten Kommunikationsprotokolls innerhalb einer vorbestimmten Zeitdauer instabil oder unmöglich werden kann, erfüllt ist.

10. Computerlesbares Speichermedium, umfassend Anweisungen, die, wenn sie durch einen Computer ausgeführt werden, den Computer veranlassen, das Verfahren nach Anspruch 9 vorzunehmen.

## Revendications

1. Console de jeu vidéo (10, 220, 320) comprenant :
une deuxième unité de réception (222) configurée pour recevoir une ou plusieurs entrées pour la console de jeu vidéo en provenance d'une manette de jeu vidéo portative (130, 230, 330) utilisant un premier protocole de communication, dans laquelle
en réponse à une détection qu'au moins un critère prédéterminé est satisfait, la deuxième unité de réception est configurée pour commuter de la réception de la ou des entrées provenant de la manette de jeu vidéo portative utilisant le premier protocole de communication, à la réception de la ou des entrées provenant d'un dispositif de traitement (210, 310) utilisant un second protocole de communication, dans laquelle
la communication utilisant le second protocole de communication présente une portée plus grande que la communication utilisant le premier protocole de communication, dans lequel au moins un critère prédéterminé est satisfait en réponse à une indication selon laquelle la communication entre la console de jeu vidéo et la manette de jeu vidéo portative utilisant le premier protocole de communication est instable ou impossible, et/ou est satisfait en réponse à une indication d'au moins une probabilité minimale selon laquelle la communication utilisant le premier protocole de communication peut devenir instable ou impossible dans une durée prédéterminée.

2. Console de jeu vidéo selon la revendication 1, comprenant en outre une deuxième unité de transmission (224) configurée pour transmettre un ou plusieurs signaux de commande pour la manette de jeu vidéo portative à la manette de jeu vidéo portative utilisant le premier protocole de communication, dans laquelle
en réponse à la détection du fait qu'au moins un critère prédéterminé est satisfait, la seconde unité de transmission est configurée pour commuter de la transmission du ou des signaux de commande à la manette de jeu vidéo portative utilisant le premier protocole de communication, à la transmission du ou des signaux de commande au dispositif de traitement utilisant le second protocole de communication.

3. Console de jeu vidéo selon l'une quelconque des revendications 1 ou 2, dans laquelle, en réponse à la détection de la satisfaction d'au moins un critère prédéterminé, la seconde unité de transmission est configurée pour transmettre, au dispositif de traitement utilisant le second protocole de communication, une demande de transfert comprenant des données qui permettent à une unité de réception du dispositif de traitement, lors de la réception de données utilisant le premier protocole de communication, d'usurper l'identité de la deuxième unité de réception.

4. Console de jeu vidéo selon la revendication 3, dans laquelle la demande de transfert comprend des données qui permettent à une unité de transmission du dispositif de traitement, lors de la transmission de données utilisant le premier protocole de communication, d'usurper l'identité de la deuxième unité de transmission.

5. Manette de jeu vidéo portative (130, 230, 330) comprenant :
une troisième unité de transmission (234) configurée pour transmettre une ou plusieurs entrées pour une console de jeu vidéo à la console de jeu vidéo utilisant un premier protocole de communication, dans laquelle
en réponse à une détection qu'au moins un critère prédéterminé est satisfait, la troisième unité de transmission est configurée pour commuter de la transmission de la ou des entrées à la console de jeu vidéo utilisant le premier protocole de communication, à la transmission de la ou des entrées à un dispositif de traitement utilisant le premier protocole de communication, dans lequel au moins un critère prédéterminé est satisfait en réponse à une indication selon laquelle la communication entre la console de jeu vidéo et la manette de jeu vidéo portative utilisant le premier protocole de communication est instable ou impossible, et/ou est satisfait en réponse à une indication d'au moins une probabilité minimale selon que la communication utilisant le premier protocole de communication puisse devenir instable ou impossible au cours d'une durée prédéterminée.

6. Manette de jeu vidéo portative selon la revendication 5, comprenant :
une troisième unité de réception configurée pour recevoir un ou plusieurs signaux de commande pour la manette de jeu vidéo portative en provenance de la console de jeu vidéo utilisant le premier protocole de communication, dans laquelle
en réponse à la détection qu'au moins un critère prédéterminé est satisfait, la troisième unité de réception est configurée pour commuter de la réception du ou des signaux de commande en provenance de la console de jeu vidéo utilisant le premier protocole de communication, à la réception du ou des signaux de commande en provenance du dispositif de traitement utilisant le premier protocole de communication.

7. Système comprenant :
une manette de jeu vidéo portative selon l'une quelconque des revendications 5 à 6 ;
une console de jeu vidéo, comprenant :
une deuxième unité de réception configurée pour recevoir la ou les entrées provenant d'au moins l'un parmi la manette de jeu vidéo portative utilisant le premier protocole de communication et un dispositif de traitement utilisant un second protocole de communication ; et
le dispositif de traitement comprenant :
une première unité de réception configurée pour recevoir une ou plusieurs entrées pour la console de jeu vidéo à partir d'une manette de jeu vidéo portative au moyen du premier protocole de communication ; et
une première unité de transmission configurée pour transmettre la ou les entrées à la console de jeux vidéo à l'aide du second protocole de communication, dans lequel
la communication utilisant le second protocole de communication présente une portée plus longue que la communication utilisant le premier protocole de communication.

8. Système comprenant :
la console de jeu vidéo selon l'une quelconque des revendications 1 à 4 ;
un dispositif de traitement comprenant :
une première unité de réception configurée pour recevoir une ou plusieurs entrées pour la console de jeu vidéo à partir d'une manette de jeu vidéo portative utilisant le premier protocole de communication ; et
une première unité de transmission configurée pour transmettre la ou les entrées à la console de jeu vidéo utilisant le second protocole de communication ; et
la manette de jeu vidéo portative configurée pour transmettre la ou les entrées, utilisant le premier protocole de communication, à au moins l'un parmi le dispositif de traitement et la console de jeu vidéo.

9. Procédé (420) pour une console de jeu vidéo, le procédé comprenant les étapes consistant à :
recevoir (422) une ou plusieurs entrées pour la console de jeu vidéo en provenance d'une manette de jeu vidéo portative utilisant un premier protocole de communication ; et
commuter (424), en réponse à une détection qu'au moins un critère prédéterminé est rempli, de la réception de la ou des entrées provenant de la manette de jeu vidéo portative utilisant le premier protocole de communication, à la réception de la ou des entrées provenant d'un dispositif de traitement utilisant un second protocole de communication, dans lequel
la communication utilisant le second protocole de communication présente une portée plus grande que la communication utilisant le premier protocole de communication, dans lequel au moins un critère prédéterminé est satisfait en réponse à une indication selon laquelle la communication entre la console de jeu vidéo et la manette de jeu vidéo portative utilisant le premier protocole de communication est instable ou impossible, et/ou est satisfait en réponse à une indication d'au moins une probabilité minimale selon laquelle la communication utilisant le premier protocole de communication peut devenir instable ou impossible dans une durée prédéterminée.

10. Support de stockage lisible par ordinateur comprenant des instructions qui, lorsqu'elles sont exécutées par un ordinateur, amènent l'ordinateur à mettre en œuvre le procédé selon la revendication 9.
